# DEMANDE DE BREVET EUROPEEN

(11) **EP 2 090 623 A1**
(43) Date de publication de la demande: **19.08.2009**
(21) Numéro de dépôt: 09305131.6
(22) Date de dépôt: 12.02.2009
(51) Int. Cl.: C09D 7/12, C09D 191/00

(54) **Utilisation de solvants issus de ressources renouvelables, peintures et enduits les comportant, procède de fabrication**

(30) Priorité: 13.02.2008 FR 0850918
(71) Demandeur: COLAS, 92100 Boulogne-Billancourt (FR)
(72) Inventeur: Bricout, Xavier, 78960, VOISINS LE BRETONNEUX (FR); Chappat, Michel, 78310, MAUREPAS (FR); Deneuvillers, Christine, 78310, MAUREPAS (FR); Harnois, Stéphane, 78280, GUYANCOURT (FR)
(74) Mandataire: Michelet, Alain

(57) **Abrégé**

L'invention concerne une application de solvant(s) à un produit comportant au moins un liant telle que le produit est une formulation de peinture ou d'enduit et que le solvant est un composé d'origine végétale renouvelable notamment agricole. Elle concerne également une peinture ou un enduit comportant au moins un liant et un solvant, tel que le solvant est d'origine végétale renouvelable. Des formulations sont données.

## Description

La présente invention concerne des utilisations (applications) de solvants issus de ressources renouvelables et notamment dans des produits de type peinture (dont les vernis) ou enduit ainsi qu'un procédé de fabrication. De fait, ces solvants peuvent être appelés « bio solvants ». Elle peut notamment être mise en oeuvre pour des peintures ou enduits de marquage routier.

Les solvants sont utilisés dans de très nombreuses industries, notamment dans celle des peintures, enduits, encres, adhésifs et colles. A titre d'exemples de formulations on peut mentionner celles décrites dans US 6,011,097, US 5,948,849 ou US 4,923,760.

Parmi les familles de produit utilisant des solvants, les peintures sont les principales. Leur fabrication s'apparente à la technique de la parachimie : dissolution, mélange et empâtage, puis dispersion et filtration sont mis en oeuvre dans le procédé de fabrication industriel. Ces produits sont des mélanges complexes de nombreux constituants. Ces constituants peuvent être regroupés en 4 grandes familles :
- Liants : ce sont les constituants les plus importants, ils sont généralement classés selon leur nature chimique (alkyde, acrylique, styrène acrylique...).
- Additifs : incorporés pour modifier certaines caractéristiques de la formulation ou pour apporter de nouvelles propriétés.
- Matières Pulvérulentes : pigments (apportent opacité, couleur, propriétés anticorrosion, anti-feu...) et charges (apportent un renfort mécanique, contrôle du brillant...).
- Solvants : apportent des propriétés de fluidité, permettent la fabrication et la mise en oeuvre (application) du produit. Une fois ces étapes réalisées et afin d'éviter une perte de performances et de durabilité du produit final, ils doivent être totalement éliminés sous leur forme solvant, essentiellement soit par évaporation, soit par réticulation (siccativation). Dans ce dernier cas ils sont considérés comme participant aux propriétés du liant ou comme plastifiant.

Ces solvants sont généralement combinés entre eux afin d'obtenir un compromis entre temps de séchage, l'ouverture du film, l'applicabilité et la solubilité du liant. Ces solvants peuvent avoir d'autres actions et, notamment, agir comme un solvant vrai qui solubilise un polymère, agir comme un solvant latent (non solvant pur) associé à un solvant vrai et ne modifiant pas son comportement ; agir comme un diluant (non solvant) et qui sert à ajuster la viscosité et sert de vecteur d'application.

Ces solvants sont classiquement issus de l'industrie pétrochimique. Les solvants les plus employés sont le toluène, le MEK, l'acétate d'éthyle ou de butyle ou d'isopropyle, le « white spirit »... Cependant, ces produits présentent un certain nombre d'inconvénients et notamment une contribution très importante à la production de Composés Organiques Volatiles (COV) préjudiciables aux personnes exposées et à l'environnement.

Un des buts de l'invention est de proposer une solution pour la fabrication de tels produits et qui évite notamment ce type d'inconvénients. A la base, l'invention consiste utiliser des solvants issus de ressources renouvelables d'origine végétale ou animale (dont agricole, forestière, aquatique), par opposition aux produits issus de la pétrochimie et, plus généralement, d'origine non renouvelable, ceci en substitution des solvants d'origine pétrochimique dans les formulations de peintures, encres, vernis, adhésifs ou colles, que le liant soit d'origine végétale ou pétrochimique. Selon ce principe, deux caractéristiques techniques sont principalement considérées. Tout d'abord, l'utilisation de solvants issus de ressources renouvelables et, préférablement, à COV réduits. Ils permettent alors un séchage du feuil par évaporation. D'autre part, l'utilisation d'huiles siccatives à titre de solvant afin que le solvant participe de par sa réticulation à la cohésion et aux propriétés du feuil. Ils restent alors retenus dans le feuil.

Parmi les avantages de ce type de solvant on peut mentionner le fait qu'ils sont généralement biodégradables et non toxiques et qu'ils sont renouvelables car notamment issus de l'agriculture, (alors appelés agrosolvants et comprenant les ressources des cultures/élevages, de la forêt et de l'aquaculture). Ils sont également à haut pouvoir solvant et ils participent aussi au cycle du carbone à la différence des produits d'origine pétrolière. Enfin, d'une manière surprenante, ce type de solvant peut être compatible avec les autres composés d'origine pétrochimique pouvant être rencontré dans les produits considérés.

Ainsi, la présente invention concerne tout d'abord une application de solvant(s) à un produit comportant au moins un liant.

Selon cette invention, le produit obtenu est une formulation de peinture (dont vernis) ou d'enduit et le/les solvants sont des composés issus de ressources renouvelables d'origine végétale ou animale, et de préférence, d'origine agricole végétale y compris de la forêt ou de l'aquaculture (de renouvellement naturel ou plantation/reproduction), le liant n'étant pas réactif chimiquement dans la formulation et le/les solvants participent à la prise de la peinture ou enduit par évaporation ou par siccativation selon le cas tout en étant compatibles avec le reste de la formulation.

Dans le contexte de l'invention, l'indication que le liant n'est pas réactif chimiquement signifie qu'il ne réticule pas.

Dans divers modes de mise en oeuvre de cette invention, les moyens suivants pouvant être utilisés seuls ou selon toutes les combinaisons techniquement possibles, sont employés :
- l'application est faite à une formulation initiale de peinture ou d'enduit qui est une liste d'ingrédients d'un mélange comportant au moins un solvant d'origine pétrochimique et elle consiste à préparer la peinture ou l'enduit *de novo* en substituant (remplaçant et adaptant) le/les solvants d'origine pétrochimique de la formulation initiale par au moins un composé issu de ressources renouvelables d'origine végétale ou animale, et de préférence, d'origine agricole végétale y compris de la forêt ou de l'aquaculture (de renouvellement naturel ou plantation/reproduction), le/lesdits solvants de substitution étant compatibles avec le reste de la formulation comportant un/des liants non réactifs,
- l'application est faite à une formulation initiale de peinture ou d'enduit qui est un mélange concret d'ingrédients comportant au moins un solvant d'origine pétrochimique et elle consiste à retirer dudit mélange le/les solvants d'origine pétrochimique et à le/les substituer (remplacer et adapter) par au moins un composé issu de ressources renouvelables d'origine végétale ou animale, et de préférence, d'origine agricole végétale y compris de la forêt ou de l'aquaculture (de renouvellement naturel ou plantation/reproduction), le/lesdits solvants de substitution étant compatibles avec le reste de la formulation comportant un/des liants non réactifs,
- un/des liants de la formulation initiale de peinture (dont vernis) ou d'enduit est d'origine pétrochimique et le/les liants d'origine pétrochimique sont en outre tous substitués (remplacés et adaptés) par un/des liants d'origine renouvelable non réactif compatible avec le reste de la formulation,
- le/les liants de la formulation initiale sont des liants végétaux,
- le liant du produit obtenu est d'origine agricole végétale y compris de la forêt ou de l'aquaculture (de renouvellement naturel ou plantation/reproduction),
- le liant d'origine agricole végétale est choisi parmi la résine de colophane ou de colophane modifiée,
- la colophane modifiée l'est par estérification, de préférence, la colophane estérifiée l'est par le glycérol ou le pentaérythritol, (notamment Dertoline® G2L ou P2L)
- de préférence, la résine de colophane présente un indice d'acide compris entre 140 et 300,
- de préférence, la résine de colophane présente un point de ramollissement compris entre 60°C et 150°C,
- le produit obtenu comporte un plastifiant, (ajouté lors de l'application ou, de préférence, dans la formulation initiale)
- le plastifiant est une huile naturelle ou modifiée ou un mélange de plusieurs huiles naturelles ou modifiées, issu de ressources renouvelables d'origine végétale ou animale, et de préférence, d'origine agricole végétale y compris de la forêt ou de l'aquaculture,
- l'huile est une huile de poisson, (notamment hareng)
- l'huile est du suif de boeuf,
- l'huile est du spermaceti,
- l'huile est une huile d'origine végétale,
- l'huile est une huile oxydée,
- l'huile est une standolie, (huile cuite près de son point d'ébullition et polymérisée)
- l'huile végétale naturelle est choisie parmi : les huiles de soja, de lin, de tournesol, de colza, de pépins de raisin, d'arachide, d'olive, de canola, de carthame, de coprah, de germe de blé, de maïs, de noix, d'amande, de palme, de sésame, de bois de Chine ou «tung», de ricin, de coton et leurs mélanges,
- l'huile végétale est un dérivé d'huile végétale ou mélange de dérivés d'huile végétale tels que les acides gras, les alcools gras, les esters d'acides gras, les esters d'acides gras modifiés chimiquement,
- le/les esters d'acides gras sont obtenus par trans-estérification d'huiles végétales avec un alcool,
- le/les esters d'acides gras préférés sont des esters de triglycérides d'acides gras (glycérine estérifiée par des molécules d'acides gras) et contiennent des insaturations,
- le/les triglycérides sont obtenus par trituration de graines et extraction d'huile, (leur hydrolyse conduit au glycérol et à des acides gras)
- le/les acides gras sont des monoacides aliphatiques,
- le/les acides gras sont des acides gras saturé(s) ou insaturé(s), monocarboxyliques comprenant 6 à 24 atomes de carbone, dicarboxyliques comprenant 12 à 48 atomes de carbone et/ou tricarboxylique(s) comprenant 18 à 72 atomes de carbone,
- de préférence, le/les acides gras sont l'acide linoléique et l'acide linolénique,
- le produit obtenu comporte un/des pigments, (ajouté lors de l'application ou, de préférence, dans la formulation initiale)
- parmi les pigments on peut citer les pigments minéraux comme les oxydes métalliques tels que l'oxyde de titane, les oxydes de fer et les pigments organiques synthétiques ou naturels tels que les pigments azoïques et naphtols et leurs mélanges,

Toujours parmi les pigments, on peut citer les pigments d'origine végétale (voire animale) agricole, forestière ou aquatique comme de la garance des teinturiers (*Rubia tinctorum* L.), du réséda ou gaude (*Reseda luteola* L.), du genêt des teinturiers (*Genista tinctoria* L.), du solidage du Canada (*Solidago canadensis* L.), du cosmos jaune (*Cosmos sulphureus* Cav.), du coréopsis des teinturiers (*Coreopsis tinctoria* Nutt.), du sorgho des teinturiers (*Sorghum bicolor* (L.) Moench.), de l'indigo de pastel (*Isatis tinctoria* L.), du bois de campêche (*Haematoxylon campechianum* L.), du bois de brésil ou pernambouc (*Caesalpinia echinata* Lam.), du québracho (*Schinopsis lorentzii* Engl.), du gambier (Uncaria gambir Roxb.), du châtaignier (Castanea sativa L.), ou de l'indigo (Indigofera anil L.) ou, encore, le nerprun, de la chlorophylle, de la cochenille, du myrobalan, de la noix de galle, du génipa ou du bois de résineux,
- le produit obtenu comporte une/des charges, (ajoutées lors de l'application ou, de préférence, dans la formulation initiale) et parmi les charges convenant pour la présente invention on peut citer, les carbonates alcalino-terreux tels que le carbonate de calcium, la silice, la poudre et les billes de verre (creuses ou non), polymères à microvides, poudre et granulats de marbre, craie, talc, dolomie et « extenders » (silicates,sulfates, wollastonites, aluminosilicates, hydrates d'aluminium), etc. et leurs mélanges,
- le produit obtenu comporte des additifs notamment choisis parmi les dispersants, les épaississants, les anti-mousses, (ajoutés lors de l'application ou, de préférence, dans la formulation initiale)
- le solvant du produit obtenu, est choisi parmi un ou plusieurs des composés suivants :
   - des solvants végétaux de type ester méthyliques, esters méthyliques modifiés chimiquement, esters éthyliques, propyliques, des esters à base d'alcool C1 à C10, des esters basés sur des chaînes grasses de C4 à C30, des huiles végétales notamment de colza, coprah, palme, tournesol ainsi que leurs dérivés notamment oxydés, insaturés ou standolisés,
   - des acétates dits « verts » et notamment l'éthylol ultrapur ou le méthylol pur de Lambiote, des produits de nettoyage issus de terpène, du bioéthanol, des alcools terpéniques qui ne sont pas considérés comme des Composés Organiques Volatiles, des esters de diacides, des dérivés de Limonène, des esters d'éther,
- le solvant du produit obtenu a été choisi pour qu'il s'évapore dudit produit,
- l'application est faite à une peinture ou un enduit qui comporte :
   - du liant végétal résine de colophane ou dérivé qui est, de préférence, de la résine de colophane estérifiée notamment au glycérol ou au pentaérythritol (ex : Dertoline® G2L ou P2L),
   - du plastifiant végétal huile végétale qui est, de préférence, de l'huile de lin,
   - du solvant végétal qui est, de préférence, du Bioéthanol®,
   - du pigment qui est, de préférence, de l'oxyde de titane + ocre naturel,
   - de la charge qui est, de préférence, du carbonate de calcium et
   - des additifs qui sont notamment des dispersants et épaississants,
- l'application est faite à une peinture ou un enduit qui comporte :
   - entre 10% et 20% de liant végétal (de préférence de la résine de colophane estérifiée au pentaérythritol) et de préférence 1 6%,
   - entre 1% et 5% de plastifiant huile végétale (de préférence de l'huile de lin) et de préférence 3%,
   - entre 10% et 30% de solvant végétal (de préférence du Bioéthanol®) et de préférence 19%,
   - entre 0 et 30% de pigment (de préférence de l'oxyde de titane + ocre naturel à raison de 11% et 6% respectivement) et de préférence 17%,
   - entre 20% et 50% de charge (de préférence du carbonate de calcium) et de préférence 44% et
   - entre 0,1% et 10% d'additifs (notamment des dispersants et épaississants de préférence à raison de 0,5% chacun) et de préférence 1 %,
   les pourcentages étant en poids,
- le solvant du produit obtenu a été choisi pour qu'il reste dans ledit produit en réticulant, (= siccativation, d'où polymérisation sur place)
- l'application est faite à une peinture ou un enduit qui comporte :
   - du liant végétal résine de colophane ou dérivé qui est, de préférence, de la résine de colophane estérifiée notamment au glycérol ou au pentaérythritol (ex : Dertoline® G2L ou P2L),
   - du plastifiant végétal huile végétale qui est, de préférence, de l'huile de colza,
   - du solvant végétal qui est, de préférence, de l'huile végétale (par ex. : Végéflux® produit fabriqué par la société COLAS®),
   - du pigment qui est, de préférence, de l'oxyde de titane,
   - de la charge qui est, de préférence, du carbonate de calcium et
   - des additifs qui sont notamment des dispersants et épaississants,
- l'application est faite à une peinture ou un enduit qui comporte :
   - entre 10% et 20% de liant végétal (de préférence, de la résine de colophane estérifiée au pentaérythritol) et de préférence 14%,
   - entre 1% et 5% de plastifiant huile végétale qui est, de préférence, de l'huile de colza à raison de 2%,
   - entre 10% et 30% de solvant végétal huile végétale (de préférence, du Végéflux®) et de préférence 22%,
   - entre 0 et 30% de pigment (de préférence, de l'oxyde de titane) et de préférence 17%,
   - entre 20% et 50% de charge (de préférence du carbonate de calcium) et de préférence 44% et
   - entre 0,1% et 15% d'additifs (notamment des dispersant et épaississant de préférence à raison de 0,5% chacun) et de préférence 1 %,
   les pourcentages étant en poids.

En ce qui concerne le plastifiant, on considère également dans le cadre de l'invention les caractéristiques qui suivent ;

De préférence, les acides gras sont isolés ou dérivés d'une huile végétale choisie parmi les huiles végétales naturelles et les huiles végétales modifiées, et par exemple parmi l'huile de soja, l'huile de lin, l'huile de tournesol, l'huile de colza, l'huile de pépins de raisin, l'huile d'arachide, l'huile d'olive, l'huile de canola, l'huile de carthame, l'huile de coprah, l'huile de germe de blé, l'huile de maïs, l'huile de noix, l'huile d'amande, l'huile de palme, l'huile de sésame et leurs mélanges.

A titre d'exemple, les acides gras saturés linéaires peuvent être choisis parmi l'acide caproïque, l'acide caprylique, l'acide caprique, l'acide laurique, l'acide myristique, l'acide palmitique, l'acide margarique, l'acide stéarique, l'acide arachidique, l'acide béhénique, et l'acide lignocérique.

A titre d'exemple les acides gras insaturés monocarboxyliques peuvent être choisis parmi l'acide palmitoléique, l'acide oléique, l'acide vaccénique, l'acide linoléique, l'acide linolénique, l'acide arachidonique, l'acide eicosapentaénoïque, l'acide érucique, l'acide docosahexaénolique, l'acide nervonique, et l'acide nonanonique.

Les acides gras définis ci-dessus sont des acides gras monocarboxyliques convenant à la réalisation de l'invention.

Des acides gras convenant également à la réalisation de l'invention sont des acides gras polymérisés, qui comprennent plus d'une fonction carboxylique, et se présentent par exemple sous forme d'acides gras sous forme de dimères ou de trimères.

A titre d'exemple d'acides gras dicarboxyliques sous forme de dimères, convenant aussi à la réalisation d'un liant de base conforme à l'invention on peut citer les acides gras comprenant 12 à 48 atomes de carbones saturés ou insaturés, de préférence insaturés et en particulier l'acide gras insaturés comprenant 18 atomes de carbones dont la référence CAS est 61788-89-4.

Enfin, à titre d'exemple d'acides gras tricarboxyliques, sous forme de trimères convenant à la réalisation d'un liant de base conforme à l'invention on peut citer les acides gras comprenant 18 à 72 atomes de carbones saturés ou insaturés, de préférence insaturés et en particulier l'acide gras insaturé comprenant 18 atomes de carbones dont la référence CAS est 68937-90-6.

L'invention concerne également une peinture (dont les vernis) ou enduit comportant au moins un liant et au moins un solvant dans sa formulation.

Selon cette invention, le/les solvants sont des composés issus de ressources renouvelables d'origine végétale ou animale, et de préférence, d'origine agricole végétale y compris de la forêt ou de l'aquaculture (de renouvellement naturel ou plantation/reproduction), le liant n'étant pas réactif chimiquement dans la formulation et le/les solvants participent à la prise de la peinture ou enduit par évaporation ou par siccativation selon le cas tout en étant compatibles avec le reste de la formulation.

Dans divers modes de mise en oeuvre de cette invention, les moyens suivants pouvant être utilisés seuls ou selon toutes les combinaisons techniquement possibles, sont employés :
- la peinture ou enduit comporte entre 10% et 20% d'au moins un liant non réactif, entre 1% et 5% d'au moins un plastifiant, entre 10% et 30% du/des solvants, entre 0,1% et 10% d'additifs et entre 20% et 80% de charge(s) et éventuel(s) pigment(s), les pourcentages étant en poids,
- la peinture ou enduit comporte en outre un latex, ledit latex représentant jusqu'à 20% de la peinture ou enduit, la proportion de charge(s) et éventuel(s) pigment(s) étant réduite en conséquence,
- le solvant végétal est choisi parmi un ou plusieurs des composés suivants :
   - des solvants végétaux de type ester méthyliques, esters méthyliques modifiés chimiquement, esters éthyliques, propyliques, des esters à base d'alcool C1 à C10, des esters basés sur des chaînes grasses de C4 à C30, des huiles végétales notamment de colza, coprah, palme, tournesol ainsi que leurs dérivés notamment oxydés, insaturés ou standolisés,
   - des acétates dits « verts » et notamment l'éthylol ultrapur ou la méthylol pur de Lambiote, des produits de nettoyage, du bioéthanol, des alcools terpéniques qui ne sont pas considérés comme des Composés Organiques Volatiles, des esters de diacides, des dérivés de Limonène, des esters d'éther,
- le liant est d'origine pétrochimique,
- le liant comporte au moins un produit d'origine pétrochimique,
- le liant est d'origine agricole végétale y compris de la forêt ou de l'aquaculture (de renouvellement naturel ou plantation/reproduction),
- le liant d'origine agricole végétale est choisi parmi la résine de colophane ou de colophane modifiée,
- la colophane modifiée l'est par estérification, de préférence, la colophane estérifié l'est par le glycérol ou le pentaérythritol, (notamment Dertoline® G2L ou P2L)
- de préférence, la résine de colophane présente un indice d'acide compris entre 140 et 300,
- de préférence, la résine de colophane présente un point de ramollissement compris entre 60°C et 150°C,
- le plastifiant est une ou un mélange de plusieurs huiles naturelles ou modifiées issu de ressources renouvelables d'origine végétale ou animale, et de préférence, d'origine agricole végétale y compris de la forêt ou de l'aquaculture,
- l'huile est une huile de poisson, (notamment hareng)
- l'huile est du suif de boeuf,
- l'huile est du spermaceti,
- l'huile est une huile d'origine végétale,
- l'huile est une huile oxydée,
- l'huile est une standolie, (huile cuite près de son point d'ébullition et polymérisée)
- l'huile végétale naturelle est choisie parmi : les huiles de soja, de lin, de tournesol, de colza, de pépins de raisin, d'arachide, d'olive, de canola, de carthame, de coprah, de germe de blé, de maïs, de noix, d'amande, de palme, de sésame, de bois de Chine ou «tung», de ricin, de coton et leurs mélanges,
- l'huile végétale est un dérivé d'huile végétale ou mélange de dérivés d'huile végétale tels que les acides gras, les alcools gras, les esters d'acides gras, les esters d'acides gras modifiés chimiquement,
- le/les esters d'acides gras sont obtenus par trans-estérification d'huiles végétales avec un alcool,
- le/les esters d'acides gras préférés sont des esters de triglycérides d'acides gras (glycérine estérifiée par des molécules d'acides gras) et contiennent des insaturations,
- le/les triglycérides sont obtenus par trituration de graines et extraction d'huile, (leur hydrolyse conduit au glycérol et à des acides gras)
- le/les acides gras sont des monoacides aliphatiques,
- le/les acides gras sont des acides gras saturé(s) ou insaturé(s), monocarboxyliques comprenant 6 à 24 atomes de carbone, dicarboxyliques comprenant 12 à 48 atomes de carbone et/ou tricarboxylique(s) comprenant 18 à 72 atomes de carbone,
- de préférence, le/les acides gras sont l'acide linoléique et l'acide linolénique,
- de préférence, les acides gras sont isolés ou dérivés d'une huile végétale choisie parmi les huiles végétales naturelles et les huiles végétales modifiées, et par exemple parmi l'huile de soja, l'huile de lin, l'huile de tournesol, l'huile de colza, l'huile de pépins de raisin, l'huile d'arachide, l'huile d'olive, l'huile de canola, l'huile de carthame, l'huile de coprah, l'huile de germe de blé, l'huile de maïs, l'huile de noix, l'huile d'amande, l'huile de palme, l'huile de sésame et leurs mélanges,
- les acides gras saturés linéaires peuvent être choisis parmi l'acide caproïque, l'acide caprylique, l'acide caprique, l'acide laurique, l'acide myristique, l'acide palmitique, l'acide margarique, l'acide stéarique, l'acide arachidique, l'acide béhénique, et l'acide lignocérique,
- les acides gras insaturés monocarboxyliques peuvent être choisis parmi l'acide palmitoléique, l'acide oléique, l'acide vaccénique, l'acide linoléique, l'acide linolénique, l'acide arachidonique, l'acide eicosapentaénoïque, l'acide érucique, l'acide docosahexaénolique, l'acide nervonique, et l'acide nonanonique,
- les acides gras définis ci-dessus sont des acides gras monocarboxyliques convenant à la réalisation de l'invention,
- les acides gras convenant également à la réalisation de l'invention sont des acides gras polymérisés, qui comprennent plus d'une fonction carboxylique, et se présent par exemple sous forme d'acides gras sous forme de dimères ou de trimères,
- à titre d'exemple d'acides gras dicarboxyliques sous forme de dimères, convenant aussi à la réalisation d'un liant de base conforme à l'invention on peut citer les acides gras comprenant 12 à 48 atomes de carbones saturés ou insaturés, de préférence insaturés et en particulier l'acide gras insaturés comprenant 18 atomes de carbones dont la référence CAS est 61788-89-4,
- à titre d'exemple d'acides gras tricarboxyliques, sous forme de trimères convenant à la réalisation d'un liant de base conforme à l'invention on peut citer les acides gras comprenant 18 à 72 atomes de carbones saturés ou insaturés, de préférence insaturés et en particulier l'acide gras insaturé comprenant 18 atomes de carbones dont la référence CAS est 68937-90-6,
- les pigments sont choisis parmi les pigments minéraux comme les oxydes métalliques tels que l'oxyde de titane, les oxydes de fer et les pigments organiques synthétiques ou naturels tels que les pigments azoïques et naphtols et leurs mélanges ou, encore, un ou plusieurs autres pigments dont ceux déjà cités ou d'autres comme par exemple : les ocres, les terres de Sienne, les terres noires (notamment avec oxyde de manganèse), terres vertes (notamment avec protoxydes de fer), le rouge anglais, lapis-lazuli, le vert de malachite, l'azurite, le bleu de tournesol, le noir de vigne, le carotène, le lycopène,
- les charges sont choisies parmi les carbonates alcalino-terreux tels que le carbonate de calcium, la silice, la poudre et les billes de verre, poudre et granulats de marbre, craie, talc, etc. et leurs mélanges,
- les additifs sont choisis parmi les dispersants, les épaississants, les anti-mousses,
- tous les composés de la formulation de peinture ou enduit sont issus de ressources renouvelables d'origine végétale ou animale, et de préférence, d'origine agricole végétale y compris de la forêt ou de l'aquaculture,
- le solvant végétal est destiné à s'évaporer,
- la peinture ou l'enduit comporte :
   - du liant végétal résine de colophane ou colophane modifiée qui est, de préférence, de la résine de colophane estérifiée notamment au glycérol ou au pentaérythritol (ex : Dertoline® G2L ou P2L),
   - du plastifiant végétal huile végétale qui est, de préférence, de l'huile de lin,
   - du solvant végétal qui est, de préférence, du Bioéthanol®,
   - du pigment qui est, de préférence, de l'oxyde de titane + ocre naturel,
   - de la charge qui est, de préférence, du carbonate de calcium et
   - des additifs qui sont notamment des dispersants et épaississants,
- la peinture ou l'enduit comporte :
   - entre 10% et 20% de liant végétal (de préférence de la résine de colophane estérifiée au pentaérythritol) et de préférence 1 6%,
   - entre 1% et 5% de plastifiant huile végétale (de préférence de l'huile de lin) et de préférence 3%,
   - entre 10% et 30% de solvant végétal (de préférence du Bioéthanol®) et de préférence 19%,
   - entre 0 et 30% de pigment (de préférence de l'oxyde de titane + ocre naturel à raison de 11% et 6% respectivement) et de préférence 17%,
   - entre 20% et 50% de charge (de préférence du carbonate de calcium) et de préférence 44% et
   - entre 0,1% et 10% d'additifs (notamment des dispersants et épaississants de préférence à raison de 0,5% chacun) et de préférence 1 %,
   les pourcentages étant en poids,
- le solvant végétal est destiné à rester dans la peinture ou l'enduit en réticulant, (= siccativation, d'où polymérisation sur place)
- la peinture ou l'enduit comporte :
   - du liant végétal résine de colophane ou colophane modifiée qui est, de préférence, de la résine de colophane estérifiée notamment au glycérol ou au pentaérythritol (ex : Dertoline® G2L ou P2L),
   - du plastifiant végétal huile végétale qui est, de préférence, de l'huile de colza,
   - du solvant végétal qui est, de préférence, de l'huile végétale (par ex. : Végéflux® produit fabriqué par la société COLAS®),
   - du pigment qui est, de préférence, de l'oxyde de titane,
   - de la charge qui est, de préférence, du carbonate de calcium et
   - des additifs qui sont notamment des dispersants et épaississants,
- la peinture ou l'enduit comporte :
   - entre 10% et 20% de liant végétal (de préférence, de la résine de colophane estérifiée au pentaérythritol) et de préférence 14%,
   - entre 1% et 5% de plastifiant huile végétale (de préférence, de l'huile de colza) et de préférence 2%,
   - entre 10% et 30% de solvant végétal huile végétale (de préférence, du Végéflux®) et de préférence 22%,
   - entre 0 et 30% de pigment (de préférence, de l'oxyde de titane) et de préférence 17%,
   - entre 20% et 50% de charge (de préférence du carbonate de calcium) et de préférence 44% et
   - entre 0,1% et 10% d'additifs (notamment des dispersants et épaississants de préférence à raison de 0,5% chacun) et de préférence 1%,
les pourcentages étant en poids.

L'invention concerne aussi un procédé de fabrication d'une composition de type peinture ou enduit à partir d'une formulation, la formulation comportant au moins un solvant d'origine pétrochimique dans lequel on substitue le/les solvants d'origine pétrochimique par au moins un solvant issu de ressources renouvelables d'origine végétale ou animale, et de préférence, d'origine agricole végétale y compris de la forêt ou de l'aquaculture, le solvant étant compatible avec le reste de la formulation.

Selon une variante du procédé, on prend une formulation qui comporte au moins un liant (d'origine pétrochimique ou issu de ressources renouvelables, ainsi la composition fabriquée bien qu'ayant un/des solvants végétaux, peut comporter des liants pétrochimiques), ledit liant étant non réactif chimiquement dans la formulation et le/les solvants issu de ressources renouvelables participent à la prise de la composition par évaporation ou par siccativation selon le cas.

Selon une variation de la variante du procédé, on prend une formulation qui comporte au moins un liant d'origine pétrochimique, ledit liant étant non réactif chimiquement dans la formulation et on substitue le/les liant d'origine pétrochimique par au moins un liant issu de ressources renouvelables d'origine végétale ou animale, et de préférence, d'origine agricole végétale y compris de la forêt ou de l'aquaculture, le liant étant compatible avec le reste de la formulation.

L'invention concerne enfin une composition de type peinture ou enduit spécifiquement obtenue par le procédé et ses variantes précédentes.

La présente invention, sans qu'elle en soit pour autant limitée, va maintenant être exemplifiée avec la description qui suit de modes de réalisation.

Les exemples d'application donnés ici concernent essentiellement des produits de type peinture ou enduit et le solvant végétal est mis en oeuvre en remplacement de solvants d'origine pétrochimique dans des formulations classiques, voire modifiées, de ces produits ou, encore dans des formulations spécifiques nouvelles.

A titre d'exemple de formulation classique, une peinture solvantée habituelle comporte à la base un liant (acrylique ou styrène/acrylique) d'origine pétrochimique, des pigments (organique ou minéral), des charges (naturelles, à base de silice, de calcaire...), des additifs (dont : dispersant, plastifiant, épaississant, fongicide...) et un solvant d'origine pétrochimique (toluène, MEK, Acétate d'éthyle, de butyle, d'isopropyle, white spirit...).

Parmi les solvants considérés dans le cadre de la présente invention pour mise en oeuvre dans les produits considérés, ont peut citer :
- Les solvants végétaux de type ester méthyliques, esters méthyliques modifiés chimiquement, esters éthyliques, propyliques... tous les esters à base d'alcool C1 à C10, basés sur des chaînes grasses de C4 à C30 et des huiles végétales (colza, coprah, palme, tournesol...) ainsi que leurs dérivés (oxydés, insaturés, standolisés...).
- Les acétates dits « verts » comme l'éthylol ultrapur ou la méthylol pur de Lambiote, des produits de nettoyage (Dexcel® bio 3000 de MMCC), le bioéthanol, des alcools terpéniques (non considérés comme COV), des esters de diacides, des dérivés de Limonène, des esters d'éther...
- Les mélanges en toutes proportions des précédents constituants.

Ces solvants et produits purs peuvent être classés en deux principales catégories. La première, avec les solvants dits légers formés de petites molécules (qui ont plutôt tendance à s'évaporer) et la seconde avec les solvants dits lourds (qui restent plutôt *in situ* et sont alors siccatifs) dont les huiles, constitués principalement de molécules à haut poids moléculaire. On considère qu'une molécule est une petite molécule lorsque sa chaîne carbonée comprend de 1 à 8 atomes de carbone.

Dans le cadre de l'application à une formulation de peinture, on considère la formulation suivante connue de peinture (lilas 2B) comportant un solvant d'origine pétrochimique et un liant non réactif :
1 6,45% de méthyléthylcétone (en deux fois : 14,55% puis 1 ,9%), 8% d'acétate de butyle (en deux fois : 5,55% puis 2,45%) 0,51 % d'épaississant (Byk 204®), 0,5% de dioxyde de silicium amorphe (Cabosil M5®), 13,18% de résine n-buthylmétacrylate/MMA (Degalan LP64/12®), 5% de paraffine chlorée (Cereclor M50®), 14,55% d'oxyde de titane, 41 ,82% de carbonate de calcium (Durcal 5®) et qui donne lors de l'analyse, un extrait sec de 75%, une teneur en cendres de 37%, une densité de 1,6 et une viscosité à 120/160s de 77KU (méthode de Krebs Unit selon la norme ASTM D562).

Le dispersant Byk 204® comporte un composé de haut poids moléculaire et est normalement destiné aux peintures en phase solvant. C'est plus précisément une solution d'un sel de polyamine amide d'acide polycarboxylique avec teneur en amine : 37 mgKOH/g, teneur en acide : 41 mgKOH/g, densité 0,93, extrait sec : 52%, point éclair : 31 °C et dont le solvant est un mélange méthoxypropanol/alkylbenzène en proportion 3/2.

A partir de cette formulation connue, l'application de l'invention avec substitution (remplacement et adaptation du/des composés non renouvelables par un/des composés renouvelables), donne à titre d'exemple la formulation résultante suivante :

Les pourcentages étant en poids : 24,5% de Vegeflux® de la société COLAS®, 0,51 % d'épaississant (Byk 204®), 0,5% de dioxyde de silicium amorphe (Cabosil M5®), 13,18% de résine n-buthylmétacrylate/MMA (Degalan LP64/12®), 5% de paraffine chlorée (Cereclor M50®), 14,55% d'oxyde de titane et 41 ,82% de carbonate de calcium (Durcal 5®) ce qui donne lors de l'analyse, un extrait sec de 75%, une teneur en cendres de 37%, une densité de 1,6 et une viscosité à 120/160s de 77KU.

A noter qu'il est également possible de substituer le liant d'origine pétrochimique par un liant d'origine renouvelable et notamment végétal comme avec la formulation suivante : 16,45% de méthyléthylcétone (en deux fois : 14,55% puis 1 ,9%), 8% d'acétate de butyle (en deux fois : 5,55% puis 2,45%), 0,51 % d'épaississant (Byk 204®), 0,5% de dioxyde de silicium amorphe (Cabosil M5®), 10,54% de résine de colophane estérifié au pentaérythritol (Dertoline P2L), 5% de paraffine chlorée (Cereclor M50®), 14,55% d'oxyde de titane, 2,45% d'acétate de butyle, 41 ,82% de carbonate de calcium (Durcal 5®) et 2,64% d'huile de soja, ce qui donne lors de l'analyse, un extrait sec de 75%, une teneur en cendres de 37%, une densité de 1,6 et une viscosité à 120/160s de 77KU.

On comprend qu'il est également possible d'effectuer une double substitution, des solvant(s) et liant(s) d'origine pétrochimique (plus généralement, non renouvelable) par des solvant(s) et liant(s) d'origine renouvelable.

Maintenant, dans le cadre de la mise en oeuvre d'un liant d'origine végétale avec réticulation (siccativation) du solvant végétal, la formulation suivante d'une première peinture a été testée : liant végétal (14% de résine de colophane estérifiée au pentaérythritol : Dertoline® P2L), plastifiant végétal (2% d'huile de colza raffinée), solvant végétal (22% de Végéflux®), pigment (17% de oxyde de titane), charge (44% de carbonate de calcium) et additifs (0,5% de dispersant Byk 204® et 0,5% d'épaississant à base de dioxyde de silicium et par ex : Cabosil®), les pourcentages approximatifs étant en poids.

Le tableau suivant présente dans le détail cette composition : Peinture N° 1 (polymérisation en place)

| | Nature du produit | Nom commercial | Fournisseur | Pourcentage en masse |
|---|---|---|---|---|
| Liant végétal | résine de colophane estérifiée au pentaérythritol | Dertoline P2L | DRT | 14 |
| Plastifiant végétal | huile végétale | Huile de colza Raffinée | Cognis | 2 |
| Solvant végétal | Huile végétale | VEGEFLUX | Ecoliant | 22 |
| Pigment | Oxyde de titane | Titanpol R-001 | ZschPolice | 17 |
| Charges | Carbonate de calcium | Durcal 5 | Omya | 44 |
| Additifs peinture | Dispersant | Byk 204 | Byk Chemie | 0,5 |
| | Epaississant | Cabosil | Cabot Corporation | 0,5 |
| | | | TOTAL | 100 |

Cette formulation de première peinture réticulable à très bon effet filmogène, permet d'obtenir un durcissement de film, lié aux conditions climatiques, de l'ordre de quelques heures lorsque le film est appliqué par pulvérisation en couches minces (environ 400 à 600 g/m² de peinture humide), et ce, sans ajout supplémentaire d'agents siccativants. La viscosité mesurée au bout de 24h est de 82KU à 21 °C. Parmi ses avantages on peut citer une (quasi) absence d'émanation de solvant (COV très faible).

Dans le cadre de la mise en oeuvre d'un liant d'origine végétale avec évaporation du solvant végétal, la formulation suivante d'une seconde peinture a été testée : liant végétal (16% de résine de colophane estérifiée à la glycérine : Dertoline® G2L), plastifiant végétal (3% d'huile de lin raffinée), solvant végétal (19% de Bioéthanol®), pigments (11% d'oxyde de titane et 6% d'ocre naturelle), charge (44% de carbonate de calcium) et additifs (0,5% de dispersant Byk 204® et 0,5% d'épaississant à base de dioxyde de silicium et par ex : Cabosil®), les pourcentages approximatifs étant en poids.

Le tableau suivant présente dans le détail cette composition : Peinture N° 2 (évaporation)

| | Nature du produit | Nom commercial | Fournisseur | Pourcentage en masse |
|---|---|---|---|---|
| Liant végétal | résine de colophane estérifiée au pentaérythritol | Dertoline P2L | DRT | 16 |
| Plastifiant végétal | huile végétale | Huile de lin Raffinée | VdP | 3 |
| Solvant végétal | Ethanol d'origine végétale | Bioéthanol | Laboratoire des UNGDA | 19 |
| Pigment | Oxyde de titane Ocre naturel | Titanpol R-001 Ocre havane | ZschPolice Maison de l'écologie | 11 6 |
| Charges | Carbonate de calcium | Durcal 5 | Omya | 44 |
| Additifs peinture | Dispersant | Byk 204 | Byk Chemie | 0,5 |
| | Epaississant | Cabosil | Cabot Corporation | 0,5 |
| | | | TOTAL | 100 |

Cette formulation de première peinture évaporable à très bon effet filmogène, permet d'obtenir un durcissement de film, lié aux conditions climatiques, de l'ordre de quelques dizaines de minutes lorsque le film est appliqué par pulvérisation en couches minces. La viscosité mesurée au bout de 24h est de 83KU à température ambiante. Parmi ses avantages on peut citer un séchage rapide.

Des caractéristiques physiques et physicochimiques des deux formulations de peinture précédentes sont données dans le tableau suivant :

| | Méthode | Peinture N° 1 | Peinture N° 2 |
|---|---|---|---|
| Extrait sec | NF EN ISO 3251 | 98% | 85% |
| Teneur en cendres | NF T 30-012 | 65% | 63% |
| Viscosité Brookfield (RV4/ 10 RPM) | ISO 2555 | 3800 mPa.s | 3040 mPa.s |
| Viscosité Brookfield (RV4/ 100 RPM) | ISO 2555 | 760 mPa.s | 710 mPa.s |
| Temps de séchage au BK | NF L 16-116 | 6 h | 4 h |
| Dureté Persoz (J+1) | NF EN ISO 1522 | 10 sec | 12 sec |

On comprend que les valeurs et proportions données sont indicatives et qu'elles peuvent varier pour chacun des exemples donnés ainsi que pour la réalisation d'autres formulations entrant dans le cadre de l'invention. En particulier, le cas d'un vernis, qui est une composition sans charge, étant prévu dans le cadre de l'invention, on comprend que la proportion de charge au sein des compositions peut varier de 0% à plusieurs dizaines de %, par exemple jusqu'à 80% comme décrit, les dosages des autres composants étant adaptés en conséquence selon les formulations.

## Revendications

1. Peinture, enduit ou vernis comportant au moins un liant et au moins un solvant dans sa formulation, le/les solvants étant des composés issus de ressources renouvelables d'origine végétale ou animale, et de préférence, d'origine agricole végétale y compris de la forêt ou de l'aquaculture, le liant n'étant pas réactif chimiquement dans la formulation, le/les solvants participant à la prise de la peinture ou enduit par évaporation ou par siccativation selon le cas tout en étant compatibles avec le reste de la formulation, **caractérisé en ce qu'**il comporte au moins: un liant non réactif et au moins un plastifiant, le/les solvant(s) et des additifs et éventuel(s) pigment(s).

2. Peinture, enduit ou vernis selon la revendication 1, **caractérisé en ce qu'**il comporte en outre au moins une charge.

3. Peinture, enduit ou vernis selon la revendication 2, **caractérisé en ce qu'**il comporte entre 10% et 20% d'au moins un liant non réactif, entre 1% et 5% d'au moins un plastifiant, entre 10% et 30% du/des solvants, entre 0,1% et 10% d'additifs et entre 20% et 80% de charge(s) et éventuel(s) pigment(s), les pourcentages étant en poids.

4. Peinture, enduit ou vernis selon la revendication 1, 2 ou 3, **caractérisé en ce que** le solvant végétal est choisi parmi un ou plusieurs des composés suivants :
- des solvants végétaux de type ester méthyliques, esters méthyliques modifiés chimiquement, esters éthyliques, propyliques, des esters à base d'alcool C1 à C10, des esters basés sur des chaînes grasses de C4 à C30, des huiles végétales notamment de colza, coprah, palme, tournesol ainsi que leurs dérivés notamment oxydés, insaturés ou standolisés,
- des acétates dits « verts » et notamment l'éthylol ultrapur ou la méthylol pur de Lambiote, des produits de nettoyage issus de terpène, du bioéthanol, des alcools terpéniques qui ne sont pas considérés comme des Composés Organiques Volatiles, des esters de diacides, des dérivés de Limonène, des esters d'éther.

5. Peinture, enduit ou vernis selon l'une quelconque des revendications précédentes, **caractérisé en ce que** le liant est issu de ressources renouvelables d'origine végétale ou animale, et de préférence, d'origine agricole végétale y compris de la forêt ou de l'aquaculture,

6. Peinture, enduit ou vernis selon la revendication 5, **caractérisé en ce que** le liant d'origine végétale est choisi parmi la résine de colophane ou de colophane modifiée, et **en ce que** de préférence, la colophane modifiée l'est par estérification, en particulier par le glycérol ou le pentaérythritol.

7. Peinture, enduit ou vernis selon l'une quelconque des revendications 1 à 6, **caractérisé en ce que** le solvant végétal est destiné à s'évaporer.

8. Peinture, enduit ou vernis selon la revendication 7, **caractérisé en ce qu'**il comporte :
- du liant végétal résine de colophane ou colophane modifiée qui est, de préférence, de la résine de colophane estérifiée notamment au glycérol ou au pentaérythritol,
- du plastifiant végétal huile végétale qui est, de préférence, de l'huile de lin,
- du solvant végétal qui est, de préférence, du Bioéthanol®,
- du pigment qui est, de préférence, de l'oxyde de titane + ocre naturel,
- de la charge qui est, de préférence, du carbonate de calcium et
- des additifs qui sont notamment des dispersants et épaississants.

9. Peinture, enduit ou vernis selon la revendication 8, **caractérisé en ce qu'**il comporte :
- 16%, de liant végétal qui est de la résine de colophane estérifiée au pentaérythritol,
- 3%, de plastifiant huile végétale qui est de l'huile de lin,
- 19%, de solvant végétal qui est du Bioéthanol®,
- entre 0 et 30% de pigment qui est de l'oxyde de titane + ocre naturel, de préférence à raison de 11% et 6% respectivement,
- entre 20% et 50%, de préférence 44%, de charge qui est du carbonate de calcium et
- des additifs, notamment des dispersants et épaississants de préférence à raison de 0,5% chacun,
les pourcentages étant en poids.

10. Peinture, enduit ou vernis selon l'une quelconque des revendications 1 à 6, **caractérisé en ce que** le solvant végétal est destiné à rester dans la peinture ou l'enduit en réticulant.

11. Peinture, enduit ou vernis selon la revendication 10, **caractérisé en ce qu'**il comporte :
- du liant végétal résine de colophane ou colophane modifiée qui est, de préférence, de la résine de colophane estérifiée notamment au glycérol ou au pentaérythritol,
- du plastifiant végétal huile végétale qui est, de préférence, de l'huile de colza,
- du solvant végétal qui est, de préférence, de l'huile végétale,
- du pigment qui est, de préférence, de l'oxyde de titane,
- de la charge qui est, de préférence, du carbonate de calcium et
- des additifs qui sont notamment des dispersants et épaississants.

12. Peinture, enduit ou vernis selon la revendication 11, **caractérisé en ce qu'**il comporte :
- 14%, de liant végétal qui est de la résine de colophane estérifiée au pentaérythritol,
- 2%, de plastifiant huile végétale qui est de l'huile de colza,
- 22%, de solvant végétal huile végétale qui est du Végéflux®,
- entre 0 et 30%, de préférence 17%, de pigment et qui est de l'oxyde de titane,
- entre 20% et 50%, de préférence 44%, de charge et qui est du carbonate de calcium et
- des additifs, notamment des dispersants et épaississants de préférence à raison de 0,5% chacun, les pourcentages étant en poids.

13. Procédé de fabrication d'une composition de type peinture, enduit ou vernis à partir d'une formulation initiale comportant au moins un liant, la formulation comportant en outre au moins un solvant d'origine pétrochimique, le liant n'étant pas réactif chimiquement dans la formulation,
**caractérisé en ce que** l'on substitue le/les solvants d'origine pétrochimique par au moins un solvant issu de ressources renouvelables d'origine végétale ou animale, et de préférence, d'origine agricole végétale y compris de la forêt ou de l'aquaculture, le solvant étant compatible avec le reste de la formulation, le/les solvants issu de ressources renouvelables participant à la prise de la composition par évaporation ou par siccativation selon le cas.

14. Procédé selon la revendication 13, **caractérisé en ce qu'**il s'applique à une formulation initiale de peinture, d'enduit ou de vernis qui est une liste d'ingrédients d'un mélange comportant au moins un solvant d'origine pétrochimique et il consiste à préparer la peinture ou l'enduit *de novo* en substituant le/les solvants d'origine pétrochimique de la formulation initiale par au moins un composé issu de ressources renouvelables d'origine végétale ou animale, et de préférence, d'origine agricole végétale y compris de la forêt ou de l'aquaculture, le/lesdits solvants de substitution étant compatibles avec le reste de la formulation comportant un/des liants non réactifs.

15. Procédé selon la revendication 13, **caractérisé en ce qu'**il s'applique à une formulation initiale de peinture, d'enduit ou de vernis qui est un mélange concret d'ingrédients comportant au moins un solvant d'origine pétrochimique et il consiste à retirer dudit mélange le/les solvants d'origine pétrochimique et à le/les substituer par au moins un composé issu de ressources renouvelables d'origine végétale ou animale, et de préférence, d'origine agricole végétale y compris de la forêt ou de l'aquaculture, le/lesdits solvants de substitution étant compatibles avec le reste de la formulation comportant un/des liants non réactifs.
